# DEMANDE DE BREVET EUROPEEN

(11) **EP 2 410 451 A1**
(43) Date de publication de la demande: **25.01.2012**
(21) Numéro de dépôt: 10170499.7
(22) Date de dépôt: 22.07.2010
(51) Int. Cl.: G06F 21/00, H01Q 1/22, G07F 7/10

(54) **Procédé de configuration d'un dispositif électronique portable, procédé d' activation et dispositif électronique correspondants**

(71) Demandeur: Gemalto SA, 92190 Meudon (FR)
(72) Inventeur: Ferreira , Isildo Dos Santos, 92197, Meudon Cedex (FR); Riou, Mikaël, 92197, Meudon (FR)
(74) Mandataire: Cour, Pierre

(57) **Abrégé**

L'invention concerne un procédé de configuration d'un dispositif électronique portable (1) comprenant une première interface (9) de communication par contact avec un lecteur associé, et une deuxième interface (11) de communication par radiofréquence avec un lecteur associé, comprenant les étapes suivantes :
- on charge dans ledit dispositif (1) une application pour l'activation de ladite deuxième interface (11) lors de la première utilisation de ladite première interface (9), et
- on désactive ladite deuxième interface (11).

L'invention concerne aussi un procédé d'activation dudit dispositif électronique portable (1), comprenant les étapes suivantes :
- on insère ledit dispositif (1) dans un lecteur associé à ladite première interface (9), et
- on active ladite deuxième interface (11) pendant l'insertion dudit dispositif (1) dans ledit lecteur associé.

L'invention concerne encore un dispositif électronique correspondant.

## Description

L'invention concerne un procédé de configuration et un procédé d'activation d'un dispositif électronique portable, et le dispositif électronique portable correspondant.

Un tel dispositif électronique portable est par exemple une carte à puce.

Une carte à puce peut permettre à titre d'exemple des opérations bancaires, des communications téléphoniques, ou encore diverses opérations d'identification.

Traditionnellement, une carte à puce est fabriquée par assemblage d'un circuit intégré dans un module qui est relié à une interface de communication. Ce module est généralement encarté, c'est à dire placé dans une cavité ménagée dans le corps de carte. Le circuit intégré formant la puce de la carte à puce est un composant sécurisé apte à communiquer uniquement avec un lecteur de carte correspondant.

L'interface de communication peut être une interface à contact. Dans ce cas, la carte comporte généralement des métallisations affleurant la surface de la carte, disposées à un endroit précis du corps de carte. Ces métallisations sont destinées à venir au contact d'une tête de lecture d'un lecteur en vue d'une transmission électrique de données.

L'interface de communication peut aussi être une interface sans contact. Dans ce cas, la carte comporte généralement une antenne permettant d'échanger des informations par radiofréquence avec un lecteur extérieur

Ainsi, la carte à puce communique avec un lecteur associé lorsque la carte à puce est amenée à proximité du lecteur. Plus précisément, le lecteur transmet des signaux grâce à son antenne et lorsque la carte à puce est située dans un rayon de détection du lecteur, son antenne détecte les signaux émis par le lecteur. Des données peuvent alors être transmises entre la carte à puce et le lecteur sans contact.

Il existe également des cartes hybrides qui comportent à la fois des métallisations affleurant la surface de la carte et une antenne dans le corps de carte. Ce type de carte peut donc échanger des données avec l'extérieur soit en mode contact, soit en mode sans contact.

L'invention concerne en particulier ce dernier type de carte comportant une interface double à contact et sans contact.

Cependant, pendant l'acheminement d'une telle carte à double interface de l'usine de fabrication à l'utilisateur final, par exemple dans une enveloppe, une personne mal-intentionnée pourrait interroger l'interface sans contact sans autorisation en approchant dans le rayon de détection de la carte, un lecteur correspondant. Cette personne pourrait donc extraire des informations confidentielles de la carte telles que des informations d'identifications, médicales, ou encore bancaires et pourrait par la suite utiliser ces informations dérobées, pour effectuer par exemple des transactions bancaires à l'insu de l'utilisateur final de la carte à puce.

En conséquence, une sécurisation accrue pour le transport de ces cartes à puce est nécessaire pour éviter le vol des données de la carte via l'interface sans contact.

On peut prévoir par exemple d'envelopper la carte à puce dans de l'aluminium ou encore de livrer la carte à puce directement dans un établissement bancaire par des transporteurs certifiés.

L'invention a pour objectif de sécuriser de façon simple la carte à puce à interface double pendant son acheminement vers l'utilisateur final.

À cet effet, l'invention a pour objet un procédé de configuration d'un dispositif électronique portable comprenant une première interface de communication par contact, et une deuxième interface de communication par radiofréquence, caractérisé en ce qu'il comprend les étapes suivantes : on charge dans ledit dispositif une application pour l'activation de ladite deuxième interface lors de la première utilisation de ladite première interface à contact, et on désactive ladite deuxième interface.

Ainsi, la deuxième interface de communication reste inactive tant que l'utilisateur final dudit dispositif n'a pas introduit la carte à puce dans un lecteur associé à la première interface de communication, évitant ainsi des interrogations non autorisées par radiofréquence de la deuxième interface, par exemple pendant le transport dudit dispositif de l'usine de fabrication jusqu'à l'utilisateur final.

Ledit procédé de configuration peut comporter en outre une ou plusieurs des caractéristiques suivantes, seules ou en combinaison :
- on configure ledit dispositif avec une fonctionnalité d'activation de ladite deuxième interface lors d'une étape de communication prédéfinie entre ladite première interface et un lecteur associé,
- ledit dispositif est une carte à puce, et l'étape de communication prédéfinie et l'étape de préparation de la première réponse de ladite carte à puce au lecteur associé suite à une requête d'initialisation provenant dudit lecteur,
- on configure ledit dispositif avec une fonctionnalité d'activation de ladite deuxième interface après authentification de l'utilisation final.

L'invention concerne aussi un procédé d'activation d'un dispositif électronique portable comprenant une première interface de communication par contact, et une deuxième interface inactive de communication par radiofréquence, caractérisé en ce qu'il comprend les étapes suivantes : on insère ledit dispositif dans un lecteur associé à ladite première interface à contact, et on active ladite deuxième interface pendant l'insertion dudit dispositif dans ledit lecteur associé.

Ledit procédé d'activation peut comporter en outre une ou plusieurs des caractéristiques suivantes, seules ou en combinaison :
- ledit procédé d'activation comprend une étape préliminaire de réception par l'utilisateur final dudit dispositif avec ladite deuxième interface inactive,
- ledit dispositif est une carte à puce, caractérisé en ce qu'on active ladite deuxième interface pendant une étape prédéfinie lors de la communication entre ladite première interface et le lecteur associé,
- on active ladite deuxième interface pendant la préparation d'une réponse de ladite carte à puce au lecteur associé suite à une requête d'initialisation provenant dudit lecteur,
- on active ladite deuxième interface après authentification de l'utilisateur dudit dispositif,
- l'authentification se fait par reconnaissance d'un code d'identification,
- ledit dispositif comprend une étape de reconnaissance d'un code d'activation pour lancer l'activation de ladite deuxième interface.

L'invention concerne encore un dispositif électronique portable comprenant une première interface de communication par contact, et une deuxième interface de communication par radiofréquence, caractérisé en ce qu'il comporte en outre une application pour l'activation de ladite deuxième interface lors de la première utilisation de ladite première interface à contact.

D'autres caractéristiques et avantages de l'invention ressortiront de la description suivante, donnée à titre d'exemple, sans caractère limitatif, en regard des dessins annexés sur lesquels :
- la figure 1 est une vue de dessus d'une carte à puce à double interface,
- la figure 2 représente de façon simplifiée une vue éclatée en perspective de la carte à puce de la figure 1,
- la figure 3 est une vue schématique d'un module support d'un circuit intégré de la carte à puce de la figure 1,
- la figure 4 représente les étapes d'un procédé de fabrication de la carte à puce de la figure 1,
- la figure 5a est un tableau représentant de façon schématique et simplifiée la commande de désactivation de l'interface sans contact de la carte à puce de la figure 1,
- la figure 5b est un tableau illustrant de façon schématique une commande de désactivation de la deuxième interface sans contact de la carte à puce de la figure 1,
- la figure 6 représente les étapes d'un procédé d'activation de la deuxième interface sans contact de la carte à puce de la figure 1, et
- la figure 7 représente les étapes d'utilisation de l'interface à contact de la carte à puce de la figure 1.

L'invention concerne un dispositif électronique portable à double interface de communication.

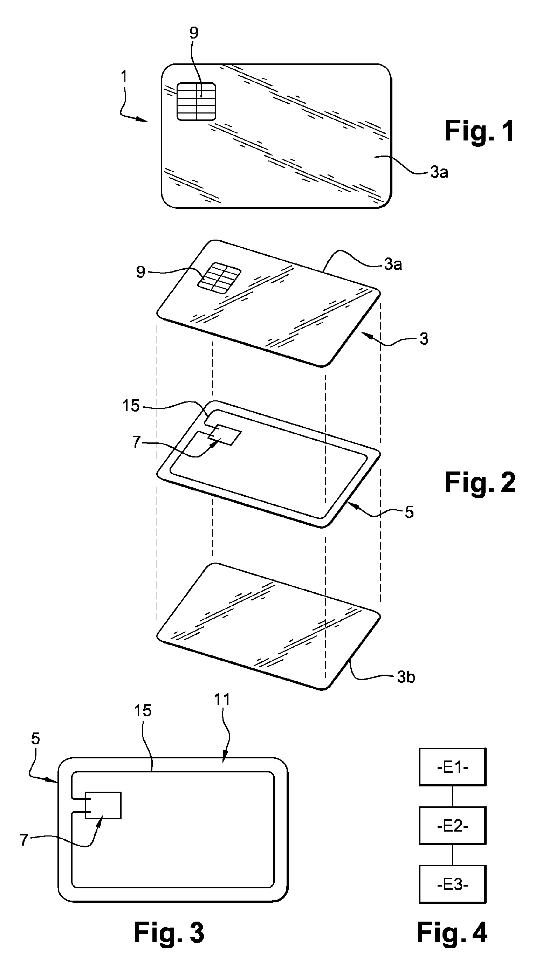

Un tel dispositif peut être une carte à puce 1 (figure 1).

On peut prévoir tout autre support d'informations comportant un circuit intégré comme un badge ou une étiquette d'identification.

On a représenté sur la figure 1 une carte à puce 1 à double interface de communication couramment appelée "combi-card" en anglais. Il s'agit à titre d'exemple d'une carte de paiement. Cette carte à puce 1 peut par exemple utiliser la technologie JAVA™ (marque déposée). Dans ce cas on parle de "Java Card" en anglais.

De façon classique, la carte à puce 1 est réalisée en matériau plastique.

En se référant également à la figure 2, cette carte à puce 1 comporte un corps de carte 3 et un module 5 (mieux visible sur la figure 3) implanté dans le corps de carte 3 et portant un circuit intégré 7 formant la puce de la carte à puce 1.

Le corps de carte 3 peut comporter une couche externe supérieure 3a et une couche externe inférieure 3b. Le module 5 est placé entre ces deux couches 3a,3b.

La couche externe supérieure 3a permet également de protéger le circuit intégré 7 (cf. figures 1 et 2).

De façon connue, le circuit intégré 7 comprend notamment un système d'exploitation avec différents services ou fonctionnalités. Et, des applications supportées par ce système d'exploitation peuvent être chargées dans la carte à puce 1.

La carte à puce 1 comporte une première interface 9 de communication à contact et une deuxième interface 11 de communication sans contact.

La première interface 9 est disposée à un emplacement prédéfini sur la couche supérieure 3a. Cette première interface 9 est reliée électriquement au circuit intégré 7. Cette connexion électrique se fait par exemple à l'aide de connecteurs électriques non représentés.

La première interface 9 de communication à contact comporte des pistes de contact électrique. Ces pistes de contact électrique sont destinées à venir en contact avec la tête de lecture d'un lecteur associé (non représenté) pour une transmission électrique de données lorsque la carte à puce 1 est introduite dans le lecteur (non représenté). Ces pistes de contact peuvent être réalisées sous la forme de métallisations affleurant la surface de la couche externe supérieure 3a.

En outre, la deuxième interface 11 de communication sans contact est disposée sur le module 5 (cf. figure 3).

Selon le mode de réalisation illustré, la deuxième interface 11 de communication sans contact comprend une antenne 15 radiofréquence RF disposée sur le module 5 par exemple sur le pourtour du module 5. L'antenne 15 est reliée électriquement au circuit intégré 7, par exemple à l'aide de connecteurs électriques non représentés.

Le module 5 est réalisé en matériau non conducteur et l'antenne 15 en matériau conducteur.

Ainsi, la carte à puce 1 peut communiquer avec le lecteur (non représenté) par radiofréquence, par exemple grâce à un couplage inductif.

Selon l'invention, la deuxième interface 11 de communication sans contact est désactivée pendant la fabrication de la carte à puce 1.

Le système d'exploitation de la carte à puce 1 comporte donc des services ou fonctionnalités d'activation de l'interface 11 sans contact et la carte à puce 1 est chargée avec une application pour réactiver la deuxième interface 11 de communication sans contact lors de l'utilisation de la première interface 9 de communication à contact, une fois la carte à puce 1 remise à l'utilisateur final.

Cette réactivation de la deuxième interface 11 de communication sans contact peut se faire automatiquement après introduction de la carte à puce 1 dans un lecteur associé (non représenté) à une étape prédéfinie lors de la communication entre la carte à puce 1 et le lecteur (non représenté).

Par exemple, cette réactivation automatique se fait pendant la préparation de la première réponse de la carte à puce 1 au lecteur associé (non représenté). Cette première réponse est appelée ATR pour "Answer To Reset" en anglais.

Cette réactivation automatique peut aussi se faire lors d'une authentification de la carte à puce 1 par exemple par un établissement bancaire pour vérifier que la carte à puce 1 est une carte de transaction bancaire valide.

En variante la réactivation peut se faire après authentification d'un code d'identification comme le code PIN pour "Personal Identification Number" en anglais.

On peut aussi prévoir que la réactivation de la deuxième interface 11 de communication sans contact se fasse après authentification d'un code d'activation. Ce code d'activation peut être différent du code PIN. Le code d'activation peut être utilisé par exemple après authentification du code PIN ou sans avoir au préalable authentifié de code PIN.

Le procédé de fabrication (figure 4) de la carte à puce 1 telle que définie précédemment comprend une étape E1 de fabrication et d'assemblage des composants de la carte à puce 1. Cette étape E1 est connue de l'Homme du Métier et ne sera pas décrit plus en détail dans la présente.

Le procédé de fabrication comporte en outre un procédé de configuration de la carte à puce 1, avec une étape E2 dans laquelle on charge dans la carte à puce 1 des programmes, applications et données personnalisées nécessaires au fonctionnement de la carte à puce 1.

En particulier, on charge lors de cette étape E2 un système d'exploitation ou « Operating System » en anglais connu sous le sigle OS. Ce système d'exploitation permet d'effectuer diverses opérations de la carte à puce 1 telles que des opérations de communication, de cryptographie, ou encore de sauvegarde d'informations. Ce système d'exploitation permet également de fournir un ensemble de services ou fonctionnalités prédéfini(e)s aux applications que l'on peut charger.

Les applications peuvent être chargées durant différentes phases du cycle de la carte, par exemple, pendant la création du système d'exploitation ou en variante après distribution de la carte à puce 1 si l'utilisateur est autorisé à charger des applications.

Parmi les services ou fonctionnalités du système d'exploitation, on prévoit donc un service ou une fonctionnalité de réactivation de l'interface 11 sans contact lors de l'utilisation de l'interface 9 à contact.

Comme mentionné précédemment, cette réactivation peut se faire soit lors d'une étape de communication prédéfinie soit après authentification de l'utilisateur final.

L'utilisateur final peut choisir le type de réactivation qu'il souhaite et c'est défini pendant la configuration et la personnalisation de la carte à puce 1.

On charge aussi une application d'activation de la deuxième interface 11 de communication sans contact. Cette activation se produit lors de l'utilisation de la première interface 9 de communication à contact.

Le procédé de configuration comporte encore une étape E3 de désactivation de la deuxième interface 11 de communication sans contact.

Par ailleurs, si on désactive l'interface 11 sans contact pendant une communication sans contact, la carte reste utilisable en mode sans contact tant que l'on ne la retire pas du champ d'un lecteur associé ou tant qu'une initialisation n'est pas effectuée.

Bien entendu, certaines étapes de ce procédé de fabrication peuvent être interverties.

À titre d'exemple, la commande pour désactiver la deuxième interface 11 de communication sans contact est par exemple formée par message comprenant au moins les cinq champs suivants :
- un premier champ nommé « CLA » renfermant l'octet identifiant la classe de la commande, concernant la désactivation de la deuxième interface 11 de communication sans contact, par exemple 80 ou 84 en hexadécimal,
- un deuxième champ nommé « INS » renfermant l'octet identifiant le type d'instruction de la commande, par exemple 0E en hexadécimal,
- un troisième champ nommé « P1 » de paramètre renfermant par exemple l'octet 80 en hexadécimal, pour que la deuxième interface 11 de communication sans contact soit inactive,
- un quatrième champ nommé « P2 » de paramètre renfermant par exemple l'octet 00 en hexadécimal, cet octet n'est pas significatif dans la commande de désactivation, et
- un cinquième champ nommé « P3 » renfermant l'octet identifiant la longueur des données d'entrée, par exemple 00 en hexadécimal.

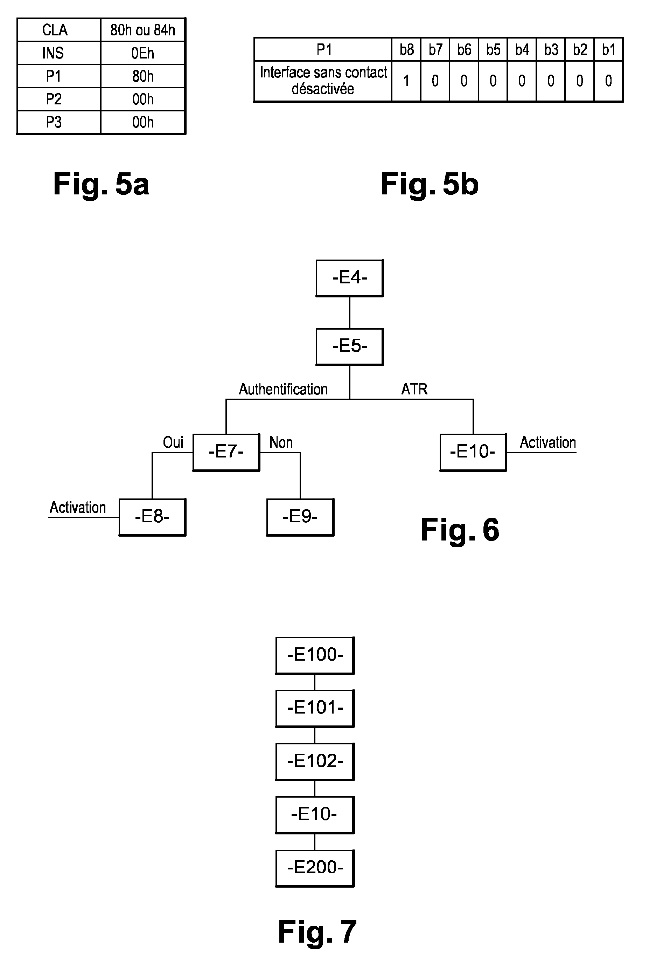

Ceci est illustré de façon schématique par le tableau figure 5a représentant ces cinq champs, et le tableau figure 5b représentant le paramètre « P1 » en notation binaire, donc avec la valeur 1 pour le huitième bit b8 et 0 pour les sept premiers bits b1 à b7.

La valeur donnée pour le troisième champ « P1 » est indiquée à titre d'exemple illustratif non limitatif.

Cette commande de désactivation est par exemple introduite dans une commande connue de l'Homme du Métier des cartes à puce généralement appelée « SetATR command » dans le domaine des cartes à puce notamment de type « java card global platform » en anglais c'est-à-dire présentant une plateforme Java. On surcharge donc cette commande « SetATR ». La commande « SetATR » est fournie par défaut par le système d'exploitation de la carte 1 et est disponible lorsque l'on accède aux fonctionnalités de la carte 1 et ce uniquement par des utilisateurs autorisés.

On décrit maintenant en référence aux figures 3 et 6, un procédé d'activation de la carte à puce 1.

Une fois la deuxième interface 11 de communication sans contact désactivée à l'étape E3, la carte à puce 1 peut être distribuée à l'utilisateur final lors d'une étape E4 de distribution.

Pendant le transport de la carte à puce 1, il n'est pas possible d'activer la deuxième interface 11 de communication sans contact puisque la première interface 9 de communication à contact n'a pas encore été utilisée. Le transport peut donc rester traditionnel en plaçant par exemple la carte à puce 1 dans une enveloppe,

En conséquence, une personne mal-intentionnée ne peut pas interroger de façon non autorisée de la deuxième interface 11 de communication sans contact. Elle ne peut donc pas dérober des informations privées contenues dans la carte à puce 1.

Lorsque l'utilisateur final reçoit la carte à puce 1, il doit donc utiliser la première interface 9 de communication à contact pour activer la deuxième interface 11 de communication sans contact. Pour cela, l'utilisateur introduit, à l'étape E5, la carte à puce 1 dans un lecteur (non représenté) associé.

À l'introduction de la carte à puce 1 selon la personnalisation de la carte à puce 1 soit on active automatiquement la deuxième interface sans contact 11 soit on authentifie au préalable l'utilisateur.

En cas d'authentification nécessaire, selon un exemple de réalisation, l'utilisateur entre son code d'identification à l'étape E7, via un clavier et un afficheur du lecteur (non représenté).

Si le code d'identification est authentifié à l'étape E8 la deuxième interface 11 de communication sans contact de la carte à puce 1 est réactivée.

Au contraire, si le code n'est pas authentifié (étape E9), la deuxième interface 11 de communication sans contact de la carte à puce 1 n'est pas réactivée et reste inactive.

Selon une alternative ou en complément, on peut prévoir un code d'activation différent du code d'identification.

Dans ce cas, lors de l'introduction de la carte à puce 1 dans le lecteur (non représenté) :
- soit l'utilisateur rentre directement le code d'activation pour s'authentifier et activer la deuxième interface 11 de communication sans contact, lorsque le code d'identification n'est pas requis,
- soit l'utilisateur rentre d'abord son code d'identification lorsqu'il est requis, pour s'authentifier, puis rentre le code d'activation pour activer la deuxième interface 11 de communication sans contact.

Par contre, lorsque l'authentification n'est pas nécessaire, la deuxième interface 11 de communication sans contact est réactivée automatiquement à l'introduction de la carte à puce 1 dans le lecteur.

Par exemple, la deuxième interface 11 sans contact est réactivée pendant la préparation de la première réponse de la carte à puce 1 au lecteur (non représenté) à l'étape E10. La réactivation est donc prévue nativement lors de l'initialisation de la toute première communication en mode contact après désactivation. Ce mode de réactivation est prévu dans le système d'exploitation lors de son écriture.

En effet, en se référant à la figure 7, lors de l'introduction de la carte à puce 1 dans le lecteur (non représenté) un procédé d'utilisation de la carte à puce 1 est mis en oeuvre.

Ce procédé d'utilisation comporte de manière classique une première étape E100 dans laquelle le lecteur (non représenté) détecte la carte à puce 1 et active les pistes de contact 9 de la carte à puce 1 (figures 1 et 7).

Ensuite, lors d'une étape E101, le lecteur (non représenté) envoie un ordre de remise à zéro ("Reset" en anglais) ou d'initialisation à destination du circuit intégré 7 de la carte à puce 1 (figures 3 et 7).

Une étape E102 d'initialisation du circuit intégré 7 est alors mise en oeuvre et la carte à puce 1 renvoie une réponse d'acquittement à l'ordre de remise à zéro ATR pour "Answer To Reset" en anglais à l'étape E10. C'est pendant la préparation de cette réponse ATR que la deuxième interface 11 sans contact peut être réactivée.

À réception de cette réponse ATR, un cycle d'échange de données entre le lecteur (non représenté) et la carte à puce 1 peut commencer à l'étape E200.

Bien sûr, la réactivation peut aussi se faire lors d'une autre étape de communication entre la carte à puce 1 et le lecteur (non représenté).

Par ailleurs, concernant la réactivation de l'interface 11 sans contact que ce soit de façon automatique ou après authentification d'un code PIN par exemple, l'interface sans contact 11 n'est disponible que lorsque que la carte est présente dans un champ d'un lecteur associé.

Au contraire, si la carte était déjà dans un champ, l'état de l'interface sans contact 11 ne change pas.

Ainsi, avec de tels procédés de configuration et d'activation d'une carte à puce 1 à interface de communication double, c'est l'utilisateur final qui active l'interface sans contact 11 lors de la première utilisation de l'interface à contact 9.

L'acheminement de la carte à puce 1 est donc sécurisé sans nécessiter la mise en place de moyens de transport plus coûteux. Cette sécurisation est assurée directement au sein de la carte à puce 1 et non par un système externe.

## Revendications

1. Procédé de configuration d'un dispositif électronique portable (1) comprenant une première interface (9) de communication par contact, et une deuxième interface (11) de communication par radiofréquence, **caractérisé en ce qu'**il comprend les étapes suivantes :
- on charge dans ledit dispositif (1) une application pour l'activation de ladite deuxième interface (11) lors de la première utilisation de ladite première interface (9) à contact, et
- on désactive ladite deuxième interface (11).

2. Procédé de configuration selon la revendication 1, **caractérisé en ce qu'**on configure ledit dispositif avec une fonctionnalité d'activation de ladite deuxième interface (11) lors d'une étape de communication prédéfinie entre ladite première interface et un lecteur associé.

3. Procédé de configuration selon la revendication 2, dans lequel ledit dispositif (1) est une carte à puce, **caractérisé en ce que** l'étape de communication prédéfinie et l'étape de préparation de la première réponse de ladite carte à puce au lecteur associé suite à une requête d'initialisation provenant dudit lecteur.

4. Procédé de configuration selon la revendication 1, **caractérisé en ce qu'**on configure ledit dispositif avec une fonctionnalité d'activation de ladite deuxième interface (11) après authentification de l'utilisation final.

5. Procédé d'activation d'un dispositif électronique portable (1) comprenant une première interface (9) de communication par contact, et une deuxième interface (11) inactive de communication par radiofréquence, **caractérisé en ce qu'**il comprend les étapes suivantes :
- on insère ledit dispositif (1) dans un lecteur associé à ladite première interface (9) à contact, et
- on active ladite deuxième interface (11) pendant l'insertion dudit dispositif (1) dans ledit lecteur associé.

6. Procédé d'activation selon la revendication 5, **caractérisé en ce qu'**il comprend une étape préliminaire de réception par l'utilisateur final dudit dispositif (1) avec ladite deuxième interface (11) inactive.

7. Procédé d'activation selon la revendication 5, dans lequel ledit dispositif (1) est une carte à puce, **caractérisé en ce qu'**on active ladite deuxième interface (11) pendant une étape prédéfinie lors de la communication entre ladite première interface (9) et le lecteur associé.

8. Procédé d'activation selon la revendication 7, **caractérisé en ce qu'**on active ladite deuxième interface (11) pendant la préparation d'une réponse de ladite carte à puce au lecteur associé suite à une requête d'initialisation provenant dudit lecteur.

9. Procédé d'activation selon la revendication 5, **caractérisé en ce qu'**on active ladite deuxième interface (11) après authentification de l'utilisateur dudit dispositif (1).

10. Procédé d'activation selon la revendication 9, **caractérisé en ce que** l'authentification se fait par reconnaissance d'un code d'identification.

11. Procédé d'activation selon la revendication 10, **caractérisé en ce qu'**il comprend une étape de reconnaissance d'un code d'activation pour lancer l'activation de ladite deuxième interface (11).

12. Dispositif électronique portable comprenant une première interface (9) de communication par contact, et une deuxième interface (11) de communication par radiofréquence, **caractérisé en ce qu'**il comporte en outre une application pour l'activation de ladite deuxième interface (11) lors de la première utilisation de ladite première interface (9) à contact.
